# EUROPEAN PATENT SPECIFICATION

(11) **EP 2 881 210 B1**
(45) Date of publication and mention of the grant of the patent: **08.04.2020**
(21) Application number: 13828234.8
(22) Date of filing: 06.08.2013
(51) Int. Cl.: B23K 20/12

(54) **WELDING TOOL USED FOR DOUBLE-ACTING TYPE FRICTION STIR WELDING OR DOUBLE-ACTING TYPE FRICTION STIR SPOT WELDING, AND WELDING DEVICE USING SAME**
SCHWEISSWERKZEUG FÜR RÜHRREIBSCHWEISSEN MIT ZWEIFACHWIRKUNG ODER RÜHRREIBPUNKTSCHWEISSEN MIT ZWEIFACHWIRKUNG UND SCHWEISSVORRICHTUNG DAMIT
OUTIL DE SOUDAGE UTILISÉ POUR UN SOUDAGE PAR FRICTION-MALAXAGE DU TYPE À DOUBLE ACTION OU UN SOUDAGE PAR POINTS PAR FRICTION-MALAXAGE DE TYPE À DOUBLE ACTION, ET DISPOSITIF DE SOUDAGE L'UTILISANT

(30) Priority: 06.08.2012 JP 2012174028
(43) Date of publication of application: 10.06.2015
(73) Proprietor: Kawasaki Jukogyo Kabushiki Kaisha, Kobe-shi, Hyogo 650-8670 (JP)
(72) Inventor: OKADA, Hideki, Kakamigahara-shi Gifu 504-8710 (JP)
(74) Representative: Leinweber & Zimmermann
(86) International application number: PCT/JP2013/004741
(87) International publication number: WO 2014/024474

(56) References cited:
- EP-A1- 1 884 308
- WO-A1-2010/074165
- JP-A- 2005 199 281
- JP-A- 2006 239 720
- JP-A- 2008 030 096
- JP-A- 2009 072 790
- JP-A- 2009 241 084
- JP-A- 2010 264 479
- JP-A- 2010 520 810
- JP-A- 2011 036 878
- JP-A- 2011 036 878
- JP-A- 2012 139 695
- US-A1- 2003 042 292

## Description

### Technical Field

The present invention relates to a welding tool for use in double-acting friction stir welding or double-acting friction stir spot welding and to a welding apparatus using the same. A welding tool according to the preamble of claim 1 is for example known from JP 2011036878 A. The present invention particularly relates to a welding tool capable of welding a workpiece favorably and to a welding apparatus using the same.

### Background Art

Friction stir welding is a technique in which a columnar pin member that is a rotary tool is pushed (pressed) into a workpiece made of a metal material, such that the metal material is softened and stirred, and thereby separate portions of the workpiece are welded together. Friction stir welding is drawing attention as a welding technique with less heat input during the welding, causing less softening or distortion.

Double-acting friction stir welding is also known, which uses a rotary tool that includes: the aforementioned pin member; and a substantially columnar shoulder member with a hollow center in which the pin member is inserted. In double-acting friction stir welding, the pin member and the shoulder member (serving as a welding tool) are both configured to rotate, advance, and retract. Therefore, by adjusting the timings of the advancing/retracting motion of the pin member and the advancing/retracting motion of the shoulder member, a recess that has been formed by pressing the pin member into the workpiece can be backfilled. In addition, double-acting friction stir spot welding often uses a substantially columnar clamp member provided outside the shoulder member.

It is known that, in double-acting friction stir welding or double-acting friction stir spot welding (hereinafter, double-acting friction stir welding and double-acting friction stir spot welding are collectively referred to as "double-acting friction stir welding"), malfunction occurs for the reason that a workpiece, an adhering material sticking out of the workpiece, or the like (hereinafter, "the workpiece or the like") enters between the pin member and the shoulder member. It is also known that malfunction similarly occurs when the workpiece or the like enters between the shoulder member and the clamp member. Specifically, pressing or pulling the welding tool into or out of the workpiece tends to cause problems, including the entry of the workpiece or the like between components. If the workpiece or the like that has entered comes in between the pin member and the shoulder member, there is a risk that the workpiece or the like adheres to surfaces of these welding tool components (e.g., an outer peripheral surface of the pin member and an inner peripheral surface of the shoulder member), due to which smooth advancing/retracting motion of the welding tool is hindered. In view of this, for example, Patent Literature 1 discloses a cleaning method of cleaning off the workpiece or the like that is stuck between the pin member and the shoulder member.

However, in double-acting friction stir welding, from the viewpoint of malfunction prevention, it is preferable to prevent the workpiece or the like from adhering to the surface of the welding tool, rather than performing cleaning whenever necessary based on such a cleaning method as above. For the purpose of such adhesion prevention, it is conceivable to form a coating on the surface of the welding tool.

For example, techniques disclosed in Patent Literatures 2, 3, and 4 are known as techniques for forming a coating on the surface of a friction stir welding tool although these techniques are not intended to prevent the adhesion of the workpiece or the like. These techniques are intended to improve the durability of the welding tool and reduce a welding time. In these techniques, the pin member is coated with, for example, an aluminum oxide coating (Patent Literature 2), or two layers of coatings including a base layer made of titanium carbide and a surface layer made of titanium nitride (Patent Literature 2), or an aluminum nitride coating (Patent Literatures 3 and 4). Patent Literature 4 further discloses using a base member with specific compositions in addition to the aluminum nitride coating.

Patent Literature 5 discloses a "rotary tool for use in friction stir spot welding", which is configured such that a coating layer is formed on an outer peripheral surface of a probe and/or an inner peripheral surface of a shoulder member. The outermost surface of the coating layer is made of a carbon nanotube. The coating layer is formed for the purpose of suppressing or preventing workpiece materials from adhering between the probe (pin member) and the shoulder member of the rotary tool.

Patent Literature 6 discloses a double-acting rotary tool for friction stir welding, wherein the pin member and the shoulder member are controlled such that the risk of galvanic corrosion of the welded workpiece is suppressed. Patent Literature 7 discloses a friction stir welding tool and an apparatus including the friction stir welding tool that is adapted to use filler material which can be used to fill excessive gaps in the weld joint.

### Citation List

### Patent Literature

PTL 1: Japanese Laid-Open Patent Application Publication No. 2007-216286
PTL 2: Japanese Laid-Open Patent Application Publication No. 2007-268605
PTL 3: Japanese Laid-Open Patent Application Publication No. 2008-030096
PTL 4: Japanese Laid-Open Patent Application Publication No. 2009-072790
PTL 5: Japanese Laid-Open Patent Application Publication No. 2011-036878
PTL 6: EP 1 884 308 A1
PTL 7: US 2003/042292 A1

### Summary of Invention

### Technical Problem

As previously mentioned, the coatings disclosed in Patent Literatures 2 to 4 are mainly intended to improve the strength of the welding tool, and these coatings are not intended to suppress the adhesion of the workpiece or the like that has entered between the pin member and the shoulder member during double-acting friction stir welding. For example, in a case where the workpiece is formed of aluminum or an aluminum alloy (i.e., an aluminum-based material), the coatings disclosed in Patent Literatures 2 to 4 cannot effectively suppress adhesion of the aluminum-based material of the workpiece. For this reason, the aforementioned malfunction cannot be avoided effectively.

If the workpiece or the like adheres to the surface of the welding tool, the surface of the welding tool may become abraded when the adhering material is removed by cleaning. If the removal of the adhering material is repeated, there is a risk that the wall thickness of the welding tool becomes thinner. For these reasons, it is desirable to keep the amount of such adhering material to minimum or zero.

Patent Literature 5 discloses a technique of forming a coating layer made of a carbon nanotube on a surface between the pin member and the shoulder member, thereby suppressing or preventing the workpiece or the like from adhering between the pin member and the shoulder member. However, this technique cannot suppress the workpiece or the like from adhering to the distal end of the pin member. For this reason, the external appearance quality of the weld is not necessarily favorable. Since the adhesion cannot be suppressed, there is a possibility that, while the pin member is moving, part of the surface of the workpiece sticks to the pin member's surface that comes into contact with the workpiece, and then detaches from the workpiece. This may negatively affect the workpiece or the welding tool. In addition, the carbon nanotube used as the material of the coating layer is very expensive. This may cause cost increase.

The present invention has been made to solve the above-described problems. An object of the present invention is, in double-acting friction stir welding or double-acting friction stir spot welding, making it possible to suppress adhesion of the workpiece or the like particularly between the pin member and the shoulder member, perform the welding efficiently, and improve the quality of the weld.

### Solution to Problem

In order to solve the above-described problems, a welding tool according to the present invention is a welding tool for use in double-acting friction stir welding or double-acting friction stir spot welding according to claim 1 in which a workpiece is partially stirred to be welded, and the welding tool is configured to rotate around an axis to stir the workpiece and configured to advance and retract in a direction of the axis. The welding tool includes: a columnar pin member whose contact surface and outer peripheral surface have non-affinity for the workpiece, the contact surface coming into contact with the workpiece; and a shoulder member positioned outside the pin member and having a cylindrical shape externally surrounding the pin member, the shoulder member being configured to rotate around an axis, which is the same as an axis of rotation of the pin member, wherein an inner peripheral surface and an outer peripheral surface of the shoulder member, the inner peripheral surface facing the pin member, have non-affinity for the workpiece, and only a contact surface of the shoulder member, the contact surface coming into contact with the workpiece, has an affinity for the workpiece. In the welding tool, a state of having non-affinity for the workpiece is realized by surface treatment, by changing a material of the tool into a different material, or by changing a property of the material of the tool into a different property.

According to the above configuration, non-affinity for the workpiece is imparted between the pin member and the shoulder member. Accordingly, even if the workpiece or the like enters between the pin member and the shoulder member, adhesion of the workpiece or the like can be suppressed or prevented effectively. Therefore, malfunction of the welding tool can be avoided effectively, and the friction stir welding or friction stir spot welding can be performed efficiently. Moreover, problems such as reduction of the wall thickness of the pin member and the shoulder member due to abrasion, and breakage of the pin member, can be suppressed effectively, which makes it possible to prevent reduction of the life of the welding tool, Furthermore, according to the above configuration, discharging of adhering materials is suppressed, which makes it possible to suppress a situation where the pin member or the shoulder member are pressed into the workpiece in such a manner as to press down the discharged materials. Therefore, damage to the surface of the weld or formation of irregularities on the surface of the weld can be substantially prevented, which makes it possible to improve the quality of the weld.

In addition, since the contact surface of the shoulder member has an affinity for the workpiece, sufficient friction occurs between the contact surface and the workpiece, and also, since the contact surface of the pin member has non-affinity for the workpiece, the following risk can be avoided: when the pin member is retracted, part of the surface of the workpiece sticks to the contact surface of the pin member and detaches from the workpiece. Therefore, the friction stir welding or friction stir spot welding can be performed more efficiently, and the weld quality can be further improved. The welding tool with the above-described configuration may further include a clamp member positioned outside the shoulder member, the clamp member being configured to push one surface of the workpiece. A contact surface and an inner peripheral surface of the clamp member may have non-affinity for the workpiece, the contact surface coming into contact with the workpiece, the inner peripheral surface facing the outer peripheral surface of the shoulder member.

In the welding tool with the above-described configuration, a state of having non-affinity for the workpiece may be realized by a coating of diamond or hydrogen-free diamond-like carbon (hydrogen-free DLC).

In the welding tool with the above-described configuration, the workpiece may be formed of at least aluminum or an aluminum alloy.

In order to solve the above-described problems, another welding tool is a welding tool for use in double-acting friction stir welding or double-acting friction stir spot welding in which a workpiece formed of at least aluminum or an aluminum alloy is partially stirred to be welded, and the welding tool is configured to rotate around an axis to stir the workpiece and configured to advance and retract in a direction of the axis. The welding tool may include: a columnar pin member whose contact surface and outer peripheral surface are coated with diamond or hydrogen-free diamond-like carbon, the contact surface coming into contact with the workpiece; and a shoulder member positioned outside the pin member and having a cylindrical shape externally surrounding the pin member, the shoulder member being configured to rotate around an axis, which is the same as an axis of rotation of the pin member, wherein an inner peripheral surface and an outer peripheral surface of the shoulder member, the inner peripheral surface facing the pin member, are coated with diamond or hydrogen-free diamond-like carbon, and only a contact surface of the shoulder member, the contact surface coming into contact with the workpiece, is neither coated with diamond nor coated with hydrogen-free diamond-like carbon.

The welding tool with the above-described configuration may further include a clamp member positioned outside the shoulder member, the clamp member being configured to push one surface of the workpiece. A contact surface and an inner peripheral surface of the clamp member may be coated with diamond or hydrogen-free diamond-like carbon, the contact surface coming into contact with the workpiece, the inner peripheral surface facing the outer peripheral surface of the shoulder member.

In order to solve the above-described problems, yet another welding tool is a welding tool for use in double-acting friction stir welding or double-acting friction stir spot welding in which a workpiece is partially stirred to be welded, and the welding tool is configured to rotate around an axis to stir the workpiece and configured to advance and retract in a direction of the axis. The welding tool may include: a columnar pin member; and a shoulder member positioned outside the pin member and having a cylindrical shape surrounding the pin member, the shoulder member being configured to rotate around an axis, which is the same as an axis of rotation of the pin member. In a case where an external diameter of the pin member is a pin external diameter, and an internal diameter is of a through-hole in the shoulder member in which the pin member is inserted is a shoulder internal diameter, a clearance between the pin member and the shoulder member may be set such that a difference between the pin external diameter and the shoulder internal diameter is in a range of not less than 0.01 mm and not more than 0.1 mm.

According to the above configuration, the clearance between the pin member and the shoulder member is suitably set, which makes it possible to suppress the workpiece or the like from entering between the pin member and the shoulder member. Therefore, malfunction of the welding tool can be avoided effectively, and the friction stir welding or friction stir spot welding can be performed efficiently. Moreover, on the weld, formation of burrs between the portion contacted by the pin member and the portion contacted by the shoulder member can be suppressed effectively. Therefore, the weld quality can be improved.

Furthermore, even if the entry of the workpiece between the pin member and the shoulder member, which may cause adhesion, occurs, the amount of entry of the workpiece will be significantly small, and thereby discharging of the workpiece that has entered will be suppressed substantially. This makes it possible to suppress a situation where the pin member and the shoulder member are pressed into the workpiece in such a manner as to press down materials that are discharged from between the pin member and the shoulder member.

The welding tool with the above-described configuration may further include a clamp member positioned outside the shoulder member, the clamp member being configured to push one surface of the workpiece. In a case where an external diameter of the shoulder member is a shoulder external diameter, and an internal diameter of a through-hole in the clamp member in which the shoulder member is inserted is a clamp internal diameter, a clearance between the shoulder member and the clamp member may be set such that a difference between the shoulder external diameter and the clamp internal diameter is in a range of not less than 0.01 mm and not more than 0.1 mm.

The present invention also includes a welding apparatus for use in double-acting friction stir welding or double-acting friction stir spot welding, the welding apparatus including the welding tool with one of the above-described configurations.

The above object, other objects, features, and advantages of the present invention will be made clear by the following detailed description of preferred embodiments with reference to the accompanying drawings.

### Advantageous Effects of Invention

The present invention provides the advantage of, in double-acting friction stir welding or double-acting friction stir spot welding, making it possible to suppress adhesion of the workpiece or the like particularly between the pin member and the shoulder member, perform the welding efficiently, and improve the quality of the weld.

### Brief Description of Drawings

Fig. 1 is a schematic diagram showing one example of the configuration of a double-acting friction stir welding apparatus according to Embodiment 1 of the present invention.
Fig. 2 is a schematic diagram showing one example of portions of a double-acting friction stir welding tool of the double-acting friction stir welding apparatus shown in Fig. 1, the portions being coated with diamond or hydrogen-free DLC.
Fig. 3 is a schematic diagram showing one example of portions of the double-acting friction stir welding tool and other components of the double-acting friction stir welding apparatus shown in Fig. 1, the portions being coated with diamond or hydrogen-free DLC.
Fig. 4 is a schematic diagram showing a double-acting friction stir welding tool included in a double-acting friction stir welding apparatus according to Embodiment 2 of the present invention, the diagram illustrating a clearance between a pin member and a shoulder member as well as a clearance between the shoulder member and a clamp member.
Fig. 5 shows the external appearance of a pin member of the double-acting friction stir welding apparatus according to Embodiment 1 of the present invention after performing friction stir welding on an aluminum member.

### Description of Embodiments

Hereinafter, preferred embodiments of the present invention are described with reference to the drawings. In the drawings, the same or corresponding elements are denoted by the same reference signs, and repeating the same descriptions is avoided below.

### (Embodiment 1)

### [Double-Acting Friction Stir Welding Apparatus]

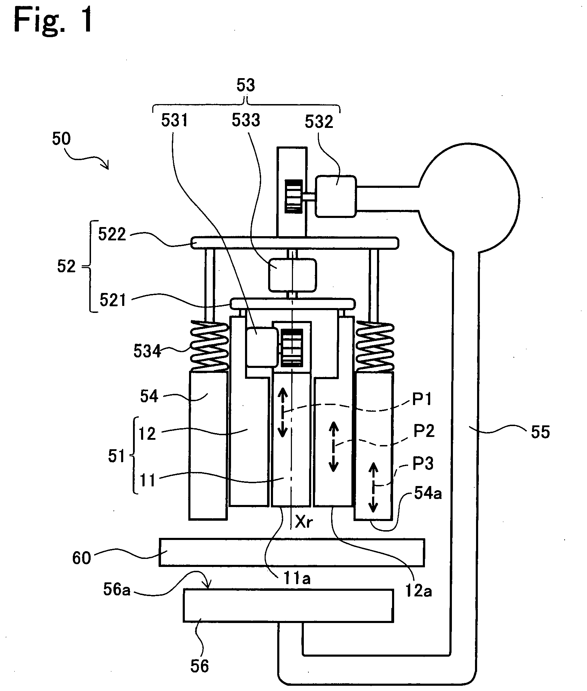

Hereinafter, a specific description of one example of the fundamental configuration of a double-acting friction stir welding apparatus according to one embodiment of the present invention is given with reference to Fig. 1. It should be noted that, in the description below, for the sake of convenience, a double-acting friction stir welding apparatus is simply referred to as a "friction stir welding apparatus", and a double-acting friction stir welding tool is simply referred to as a "welding tool". In addition, as previously mentioned, double-acting friction stir welding and double-acting friction stir spot welding herein are collectively referred to as "double-acting friction stir welding". Accordingly, the "friction stir welding apparatus" described in the present embodiment may be either a "double-acting friction stir welding apparatus" or a "double-acting friction stir spot welding apparatus".

As shown in Fig. 1, a friction stir welding apparatus 50 according to the present embodiment includes a rotary tool 51, a tool fixing part 52, a tool driving part 53, a clamp member 54, a backing support 55, and a backing member 56.

The rotary tool 51 is a welding tool supported by the tool fixing part 52. The tool driving part 53 drives the rotary tool 51 to advance, retract, and rotate. The rotary tool 51, the tool fixing part 52, the tool driving part 53, and the clamp member 54 are provided on the upper part of the backing support 55, which is constituted by a C-type gun (C-type frame). The backing member 56 is provided on the lower part of the backing support 55. In this manner, the rotary tool 51 and the backing member 56 are attached to the backing support 55 at their respective positions in such a manner as to face each other. A workpiece 60 is placed between the rotary tool 51 and the backing member 56. It should be noted that, in the present invention, the workpiece 60 is formed of aluminum or an aluminum alloy (an aluminum-based material).

The rotary tool 51 is constituted by a pin member 11 and a shoulder member 12. The tool fixing part 52 is constituted by a rotary tool fixing part 521 and a clamp fixing part 522. The tool driving part 53 is constituted by a pin-driving part 531, a shoulder-driving part 532, a rotation driving part 533, and a spring 534. The clamp member 54 is fixed to the clamp fixing part 522 via the spring 534.

The pin member 11 is substantially cylindrical or substantially columnar. The pin member 11 is supported by the rotary tool fixing part 521 although it is not shown in detail. The pin member 11 is driven by the rotation driving part 533 to rotate around an axis Xr (an axis of rotation indicated by a dashed-dotted line in Fig. 1), and the pin member 11 is configured to advance and retract in a direction indicated by a dashed-line arrow PI, i.e., in the direction of the axis Xr (the vertical direction in Fig. 1), by being driven by the pin-driving part 531. The shoulder member 12 is substantially cylindrical and has a hollow center in which the pin member 11 is inserted. The shoulder member 12 is supported by the rotary tool fixing part 521, such that the shoulder member 12 surrounds the pin member 11 at the outside of the pin member 11. The shoulder member 12 is driven by the rotation driving part 533 to rotate around the axis Xr, which is the same as the axis of rotation of the pin member 11, and the shoulder member 12 is configured to advance and retract in a direction indicated by a dashed-line arrow P2, i.e., in the direction of the axis Xr, by being driven by the shoulder-driving part 532.

As described above, in the present embodiment, both the pin member 11 and the shoulder member 12 are supported by the same rotary tool fixing part 521, and driven by the rotation driving part 533 to integrally rotate around the axis Xr. In addition, the pin member 11 and the shoulder member 12 are configured to advance and retract in the direction of the axis Xr by being driven by the pin-driving part 531 and the shoulder-driving part 532, respectively. It should be noted that, in the configuration shown in Fig. 1, the pin member 11 can advance and retract independently, and can also advance and retract in accordance with the advancing and retracting movement of the shoulder member 12. Alternatively, the pin member 11 and the shoulder member 12 may be configured to advance and retract independently of each other.

The clamp member 54 is provided outside the shoulder member 12. Similar to the shoulder member 12, the clamp member 54 is cylindrical and has a hollow center in which the shoulder member 12 is inserted. Accordingly, the substantially cylindrical shoulder member 12 is positioned around the outer periphery of the pin member 11, and the substantially cylindrical clamp member 54 is positioned around the outer periphery of the shoulder member 12. In other words, the clamp member 54, the shoulder member 12, and the pin member 11 form a nested structure, in which these components are arranged concentrically.

The clamp member 54 is configured to push one surface (a first surface) of the workpiece 60. In the present embodiment, the clamp member 54 is supported by the clamp fixing part 522 via the spring 534. Accordingly, the clamp member 54 is urged toward the backing member 56. The clamp fixing part 522 supports the rotary tool fixing part 521 via the rotation driving part 533. The clamp fixing part 522 is configured to advance and retract in a direction indicated by a dashed-line arrow P3 (which is the same direction as the directions indicated by the dashed-line arrows P1 and P2) by being driven by the shoulder-driving part 532.

It should be noted that since the spring 534 is a component configured to urge the clamp member 54 or impart pressing force to the clamp member 54, the spring 534 may be suitably replaced by, for example, a mechanism using gas pressure, hydraulic pressure, a servomotor, or the like. The spring 534 may be configured to advance and retract by being attached to the shoulder-driving part 532 as shown in Fig. 1, or may be configured to advance and retract independently without being driven by the shoulder-driving part 532.

As previously described, the rotary tool 51, the tool fixing part 52, the tool driving part 53, and the clamp member 54 in the above configuration are provided on the backing support 55, such that these components face the backing member 56. The pin member 11 and the shoulder member 12, which form the rotary tool 51, and the clamp member 54 have a contact surface 11a, a contact surface 12a, and a contact surface 54a, respectively. The tool driving part 53 causes these contact surfaces 11a, 12a, and 54a to advance and retract in such that a manner as to allow these surfaces to come into contact with the first surface of the workpiece 60, which is placed between the backing member 56 and these surfaces. The backing member 56 is positioned such that the backing member 56 faces the pin member 11, the shoulder member 12, and the clamp member 54, and the backing member 56 is configured to come into contact with the other surface (a second surface) of the workpiece 60. In Fig. 1, the backing member 56 has a flat surface, such that the flat surface comes into contact with the second surface of the workpiece 60, which is in the shape of a flat plate.

The backing member 56 is positioned at the advancing direction side of the pin member 11 and the shoulder member 12. In a state where the first surface of the workpiece 60 is directed to face the pin member 11 and the shoulder member 12, the backing member 56 supports the second surface of the workpiece 60 by a supporting surface 56a. The configuration of the backing member 56 is not particularly limited, so long as the backing member 56 is configured to properly support the workpiece 60 so that friction stir spot welding can be performed on the workpiece 60. The backing member 56 may usually be configured in the shape of a flat plate having the supporting surface 56a, on which the plate-shaped workpiece 60 can be supported in a stable manner. However, as an alternative, the backing member 56 may be configured in a shape different from the shape of a flat plate in accordance with the shape of the workpiece 60. For example, detachable and replaceable backing members 56 in different shape types may be prepared separately, and the backing member 56 that is currently attached to the backing support 55 may be detached therefrom and replaced with another backing member 56 in accordance with the shape type of the workpiece 60.

Specific configurations of the rotary tool 51, the tool fixing part 52, and the tool driving part 53 according to the present embodiment are not limited to the above-described configurations. A wide range of configurations known in the field of friction stir welding can be suitably applied. For example, in the present embodiment, the pin-driving part 531, the shoulder-driving part 532, and the rotation driving part 533, which form the tool driving part 53, are configured by using motors, gear mechanisms, etc., which are known in the field of friction stir welding. Owing to the nature of the configuration of the friction stir spot welding apparatus 50A, the clamp member 54 may be eliminated. As one example, the clamp member 54 may be configured to be detachable from the backing support 55 as necessary. In addition, the configuration in Fig. 1 may include other components that are not shown.

Although a C-type gun serves as the backing support 55 in the present embodiment, the configuration of the backing support 55 is not thus limited. The backing support 55 may be configured in any form, so long as the backing support 55 is configured to support the pin member 11 and the shoulder member 12 in a manner to allow them to advance and retreat, and support the backing member 56 in such a position that the backing member 56 faces these components of the rotary tool 51. It should be noted that the backing support 55 can be mounted on a known machining apparatus or the like, which is not shown, such as a robot apparatus for use in friction stir spot welding, a NC machining tool, a large-sized C frame, an automatic riveter, etc.

Hereinafter, one example of a friction stir welding method that is executed by using the above-described friction stir spot welding apparatus 50 is described. First, the rotary tool 51 is brought close to the workpiece 60, and the contact surface 54a of the clamp member 54 and the supporting surface 56a of the backing member 56 are brought into contact with the workpiece 60. Thereafter, the rotary tool 51 is brought closer to the workpiece 60 such that the contact surface 11a of the pin member 11 and the contact surface 12a of the shoulder member 12 come into contact with the workpiece 60. In this state, the rotary tool 51 is rotated.

As a result, portions of the workpiece 60 that are in contact with the pin member 11 and the shoulder member 12 generate heat due to friction, and are thereby softened, which makes plastic flow zone. The material in the plastic flows zone can be stirred by causing the pin member 11 and the shoulder member 12 to plunge into and retract from the workpiece 60. In this manner, part of the workpiece 60 can be stirred and welded. Moreover, for example, a recess that is formed by plunging (pressing) the pin member 11 into the workpiece 60 can be backfilled by means of the shoulder member 12. Thereafter, the rotary tool 51 and the backing member 56 are removed from the workpiece 60, and thus a series of friction stir welding is ended.

### [Surface Treatment of Rotary Tool]

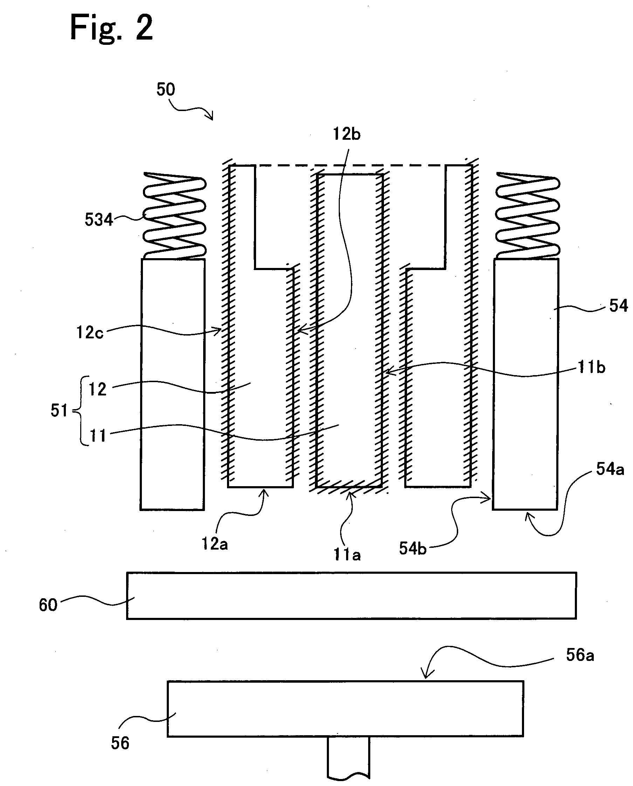

The rotary tool 51 (welding tool) included in the friction stir welding apparatus 50 according to the present embodiment is configured such that a large part of the surface of the rotary tool 51 has a low affinity for the workpiece 60. However, some part of the surface of the rotary tool 51 has a favorable affinity for the workpiece 60. In this respect, a specific description is given below with reference to Fig. 2.

In the present embodiment, a state where the surface of the rotary tool 51 "has a low affinity for the workpiece 60" means a state where the material forming the workpiece 60 (i.e., the workpiece or the like) does not easily stick to or adhere to the surface of the rotary tool 51. In other words, this state is a state where the surface of the rotary tool 51 "has non-affinity for the workpiece 60". It should be noted that the state of "having non-affinity for the workpiece 60" is in other words the state of having low friction against the workpiece 60. Therefore, the state of "having a favorable affinity (having affinity) for the workpiece 60" is in other words the state of having high friction against the workpiece 60.

The state of "having a low affinity for the workpiece 60" (i.e., the state of having non-affinity for the workpiece 60) can be realized typically by surface treatment. The surface treatment may be any type of surface treatment, so long as the surface treatment realizes low adhesion to the workpiece 60. Specific examples of the surface treatment include various known coatings. In particular, a coating of diamond or hydrogen-free diamond-like carbon (hydrogen-free DLC) is preferably used.

As schematically shown in Fig. 2 by diagonal hatching, the pin member 11 of the rotary tool 51 is such that the contact surface 11a, which comes into contact with the workpiece 60, and an outer peripheral surface 11b are coated with diamond or hydrogen-free DLC. The shoulder member 12 is such that an inner peripheral surface 12b facing the pin member 11 and an outer peripheral surface 12c facing the clamp member 54 are coated with diamond or hydrogen-free DLC. However, the contact surface 12a of the shoulder member 12 is neither coated with diamond nor coated with hydrogen-free DLC.

As a result of studies conducted by the inventors of the present invention, it has been found out that a diamond coating or a hydrogen-free DLC coating has a significantly low affinity (i.e., has non-affinity) for a metal material compared to a general DLC coating or other ceramic-based hard films. Specifically, for example, in a case where the metal material is an aluminum-based material, the bonding structure between diamond-like carbon atoms is such that the carbon atoms are not easily bound to aluminum atoms. Therefore, a DLC coating, compared to other ceramic coatings, tends to have a lower affinity for aluminum-based materials.

Moreover, if impurities such as hydrogen atoms are present in a coating, the impurities cause defects (formation of pores), and aluminum atoms enter the pores. Thus, these pores are points where adhesion occurs. In this respect, a diamond coating or a hydrogen-free DLC coating contains a less amount of impurities, such as hydrogen, compared to a general DLC coating. Therefore, in a diamond coating or a hydrogen-free DLC coating, the points where adhesion occurs are significantly less than in a general DLC coating. In addition, a diamond coating or a hydrogen-free DLC coating has a feature that its frictional coefficient is significantly small. Specifically, the frictional coefficient of a diamond coating or a hydrogen-free DLC coating is 0.1 or less.

Therefore, during friction stir welding, even if an adhering material, i.e., the aluminum-based material that sticks out of the workpiece 60, or the like is produced, and the adhering material or the like enters between the pin member 11 and the shoulder member 12, the adhering material or the like will not form into an aggregate. Therefore, malfunction of the rotary tool 51 can be effectively avoided, and the friction stir welding can be performed efficiently. Also, discharging of the workpiece or the like that has adhered is suppressed. This makes it possible to suppress a situation where the pin member 11 and the shoulder member 12 are pressed into the workpiece 60 in such a manner as to press down discharged materials. Therefore, damage to the surface of the weld as well as formation of irregularities on the surface of the weld can be substantially prevented, which makes it possible to improve the quality of the weld.

Moreover, in the present invention, the entire surface of the rotary tool 51 is not simply coated with diamond or hydrogen-free DLC. In the present invention, the contact surface 11a of the pin member 11 is coated with diamond or hydrogen-free DLC, whereas the contact surface 12a of the shoulder member 12 is neither coated with diamond nor coated with hydrogen-free DLC. This makes it possible to perform the friction stir welding more efficiently, and further improve the weld quality.

The peripheral speed of the contact surface 12a of the shoulder member 12 in relation to the workpiece 60 is relatively higher than that of the contact surface 11a of the pin member 11. Here, since the contact surface 12a of the shoulder member 12 is neither coated with diamond nor coated with hydrogen-free DLC, the contact surface 12a has a favorable affinity for the workpiece 60. Therefore, sufficient friction occurs between the contact surface 12a and the workpiece 60. This consequently makes it possible to perform the friction stir welding more efficiently.

Since the peripheral speed of the contact surface 11a of the pin member 11 in relation to the workpiece 60 is relatively low, if the contact surface 11a has a high affinity for the workpiece 60, there is a possibility that, when the pin member 11 is retracted, part of the first surface of the workpiece 60 sticks to the contact surface 11a and detaches from the workpiece 60. However, by coating the contact surface 11a of the pin member 11 with diamond or hydrogen-free DLC, such detachment of the first surface of the workpiece 60 can be avoided, which makes it possible to further improve the weld quality.

In addition, since the workpiece or the like does not adhere between the pin member 11 and the shoulder member 12, abrasion of the pin member 11 and the shoulder member 12 can be suppressed effectively. Although the clearance between the pin member 11 and the shoulder member 12 is not particularly limited, if the design clearance is set to be small, then there is a risk of the occurrence of red heat phenomenon of these components of the rotary tool 51. However, coating the outer peripheral surface 11b of the pin member 11 and the inner peripheral surface 12b of the shoulder member 12 with diamond or hydrogen-free DLC makes it possible to suppress the occurrence of red heat phenomenon, and further, makes it possible to suppress a situation where the pin member 11 and the shoulder member 12 are pressed into the workpiece 60 in such a manner as to press down the workpiece or the like that has adhered. Therefore, the frequency of occurrence of damage to the pin member 11, such as breakage, can be reduced effectively, which makes it possible to avoid reduction of the life of the rotary tool 51.

The definition of hydrogen-free DLC herein includes not only DLC that contains no hydrogen atoms but also DLC that contains a less amount of hydrogen atoms than general DLC. Accordingly, in the present invention, the hydrogen-free DLC with which to coat the pin member 11 and the shoulder member 12 is, for example, DLC that contains 10 at % (atomic concentration) or less of hydrogen. Such DLC, compared to general DLC, makes it possible to lower the affinity for aluminum-based materials and the like (i.e., impart non-affinity for aluminum-based materials and the like). As a result, the adhesion of the workpiece or the like can be suppressed or avoided effectively.

A method used to coat the pin member 11 and the shoulder member 12 with diamond or hydrogen-free DLC is not particularly limited. For example, a known physical vapor deposition technique may be suitably used. As one example, in an atmosphere containing no hydrogen, a method in which graphite is used as a raw material and carbon is vapor-deposited by a known physical vapor deposition technique may be suitably used.

It is preferable that the irregularities of the coating surfaces of the pin member 11 and the shoulder member 12, i.e., the contact surface 11a and the outer peripheral surface 11b of the pin member 11 and the inner peripheral surface 12b and the outer peripheral surface 12c of the shoulder member 12, be small so that the coating surfaces can be favorably coated with diamond or hydrogen-free DLC.

A method used to prevent the contact surface 12a of the shoulder member 12 from being coated with diamond or hydrogen-free DLC is not particularly limited. At the time of vapor-depositing carbon by a physical vapor deposition technique, the contact surface 12a may be masked by a known method. Alternatively, first, the coating may be formed on the entire surface of the shoulder member 12, and then only the contact surface 12a may be polished to remove diamond or hydrogen-free DLC therefrom.

Although in the present embodiment the coating has been described as one example of the surface treatment of the pin member 11, the shoulder member 12, and the clamp member 54 (i.e., the surface treatment of the rotary tool 51), the surface treatment to be performed in the present invention is of course not limited to coating. That is, in the present invention, any known surface treatment technique different from coating can be suitably used, so long as the surface properties of the rotary tool 51 can be changed by the technique. Even a technique different from surface treatment can be suitably used.

Specifically, in the present invention, portions of the rotary tool 51 where the adhesion of the workpiece 60 is to be prevented or avoided may be formed of a material (or may have a surface) with a low affinity for the workpiece 60 and with low adhesion, and the contact surface (bottom surface) 12a of the shoulder member 12 may be formed of a material (or may have a surface) with a favorable affinity for the workpiece 60. Alternatively, the contact surface 12a of the shoulder member 12 may be formed of a material with which friction can be caused against the workpiece 60 (or, for example, the state of the contact surface 12a may be altered so that friction can be caused against the workpiece 60).

A technique used to perform the coating, surface treatment, or partial change of material is not particularly limited. Any coating with a low affinity for the workpiece 60, any surface treatment, or any material may be suitably chosen and used in accordance with the type of the workpiece 60. Another example of coating is a coating of a ceramic material such as silicon nitride (Si₃N₄). It should be noted that the present embodiment adopts a coating of diamond or a coating of hydrogen-free DLC as a preferable "affinity-lowering" technique, and these coatings are suitably and widely applicable to general metal materials and have broad utility.

Patent Literature 5 discloses a technique of forming a coating layer made of a carbon nanotube on a surface between the pin member and the shoulder member. However, a welding tool adopting such a technique has the problems previously described. In addition, by merely performing welding several hundred times, the welding tool becomes overloaded and becomes unable to perform welding. On the other hand, the welding tool (the rotary tool 51) according to the present embodiment is capable of performing welding with no particular problem even after the welding tool has performed welding, for example, more than 2000 times.

The workpiece 60 herein, on which the friction stir welding apparatus 50 according to the present embodiment is to perform welding, may typically be formed of a metal. The metal is not limited to a particular kind. One specific example of the metal is the aforementioned aluminum-based material (i.e., aluminum or an aluminum alloy). The workpiece 60 is not limited to an aluminum-based material, but may be formed of, for example, a different kind of metal such as titanium or iron, or an alloy of such a metal. Moreover, the friction stir welding apparatus 50 according to the present embodiment can also be effectively used to weld dissimilar metals together, for example, to weld aluminum and titanium together or to weld aluminum and iron together. Therefore, the workpiece 60 may be formed of a plurality of kinds of metals. Furthermore, the workpiece 60 is not limited to a metal or metals, but may be formed of a different material to which friction stir welding is applicable, such as various resins.

### [Variation]

As previously described, the welding tool according to the present invention is for use in double-acting friction stir welding or double-acting friction stir spot welding, and includes: the columnar pin member 11, which is configured to rotate around an axis; and the pin member 11 and the shoulder member 12, which are cylindrical and externally surround the pin member 11. The welding tool according to the present invention may be configured to have the following features: the contact surface 11a and the outer peripheral surface 11b of the pin member 11 have a low affinity for the workpiece 60 (i.e., have non-affinity for the workpiece 60); the inner peripheral surface 12b and the outer peripheral surface 12c of the shoulder member 12 have a low affinity for the workpiece 60 (i.e., have non-affinity for the workpiece 60); and only the contact surface 12a has a favorable affinity for the workpiece 60.

In a case where the welding tool according to the present invention includes the clamp member 54, the contact surface 54a of the clamp member 54 and an inner peripheral surface 54b of the clamp member 54 may have a low affinity for the workpiece 60 (i.e., have non-affinity for the workpiece 60).

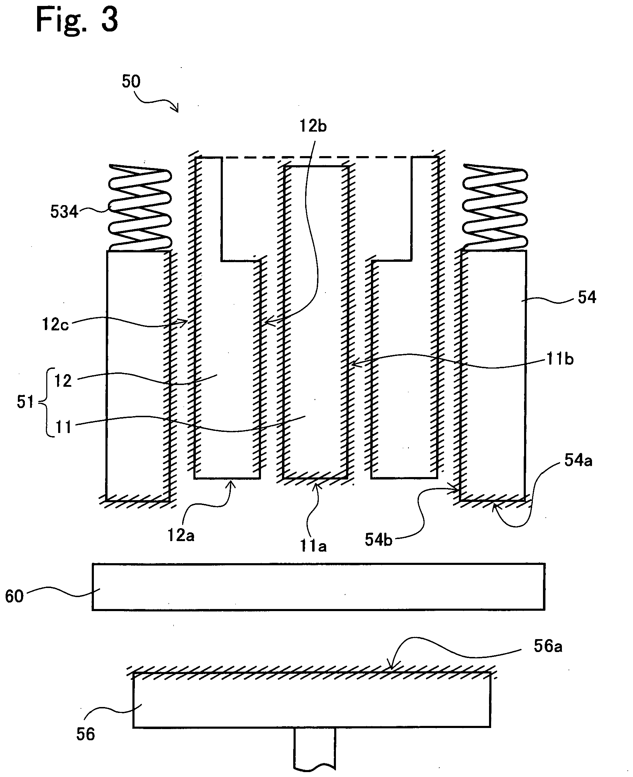

However, the present invention is not limited to the above. For example, not only the rotary tool 51 but also other components may have non-affinity for the workpiece 60. Specifically, in the present embodiment, the welding tool included in the friction stir welding apparatus 50, i.e., the rotary tool 51, may be coated with diamond or hydrogen-free DLC except the contact surface 12a of the shoulder member 12. In addition, for example, other components different from the rotary tool 51 may be coated with diamond or hydrogen-free DLC. This makes it possible to further suppress malfunction of the rotary tool 51 and improve the efficiency of the friction stir welding. A specific description of the friction stir welding apparatus 50 with such an additional feature (i.e., one variation of the friction stir welding apparatus 50) is given below with reference to Fig. 3.

Specifically, for example, as schematically shown in Fig. 3 by diagonal hatching, the clamp member 54 and the backing member 56 may be coated with diamond or hydrogen-free DLC.

In the case of the clamp member 54, the contact surface 54a which comes into contact with the workpiece 60, and the inner peripheral surface 54b which faces the outer peripheral surface 12c of the shoulder member 12, may be coated with diamond or hydrogen-free DLC. Unlike the rotary tool 51, the clamp member 54 does not rotate. However, since the clamp member 54 pushes the first surface of the workpiece 60, it is preferable for the contact surface 54a, which comes into contact with the workpiece 60, to be coated with diamond or hydrogen-free DLC.

Since the clamp member 54 is positioned in such a manner as to surround the shoulder member 12, there is a risk that the workpiece or the like enters between the shoulder member 12 and the clamp member 54 as a result of the advancing and retracting movement of the shoulder member 12. Therefore, it is also preferable for the inner peripheral surface 54b, which faces the shoulder member 12, to be coated with diamond or hydrogen-free DLC. It should be noted that the clamp member 54, which is part of the friction stir welding apparatus 50 in the present embodiment, may form the rotary tool 51 (the friction stir welding tool) together with the pin member 11 and the shoulder member 12.

In the case of the backing member 56, the supporting surface 56a which supports the workpiece 60 may be coated with diamond or hydrogen-free DLC. The backing member 56 is positioned at the advancing direction side when seen from the rotary tool 51, and is configured to support the workpiece 60 by bringing the supporting surface 56a into contact with the second surface of the workpiece 60 in a state where the first surface of the workpiece 60 is directed to face the rotary tool 51. Therefore, the area of contact between the backing member 56 and the workpiece 60 is significantly large. For this reason, the workpiece or the like, which is produced from the workpiece 60, tends to get in between the second surface and the supporting surface 56a. In this respect, by coating the supporting surface 56a with diamond or hydrogen-free DLC, the workpiece or the like can be suppressed from adhering between the workpiece 60 and the supporting surface 56a.

A bushing provided inside the clamp member 54 suppresses run-out of the shoulder member 12 positioned inside the clamp member 54 while the shoulder member 12 is rotating. Since the presence of the bushing makes it possible to suppress excessive contact between the clamp member 54 and the shoulder member 12, the abrasion of, in particular, the shoulder member 12 of the rotary tool 51 can be reduced.

It should be noted that the manner in which the bushing is in contact with the pin member 11 or the shoulder member 12 is not particularly limited. The bushing may be in contact with the pin member 11 or the shoulder member 12 by lubricated contact via a known lubricant or by non-lubricated contact without any lubricant or the like.

In the present embodiment, the present invention is described by taking double-acting friction stir welding as an example. However, the present invention is not thus limited. The present invention is suitably applicable not only to double-acting friction stir welding but also to single-acting friction stir welding. Also, the present invention is suitably applicable to double-acting friction stir spot welding as well as friction stir welding that is not spot welding.

### (Embodiment 2)

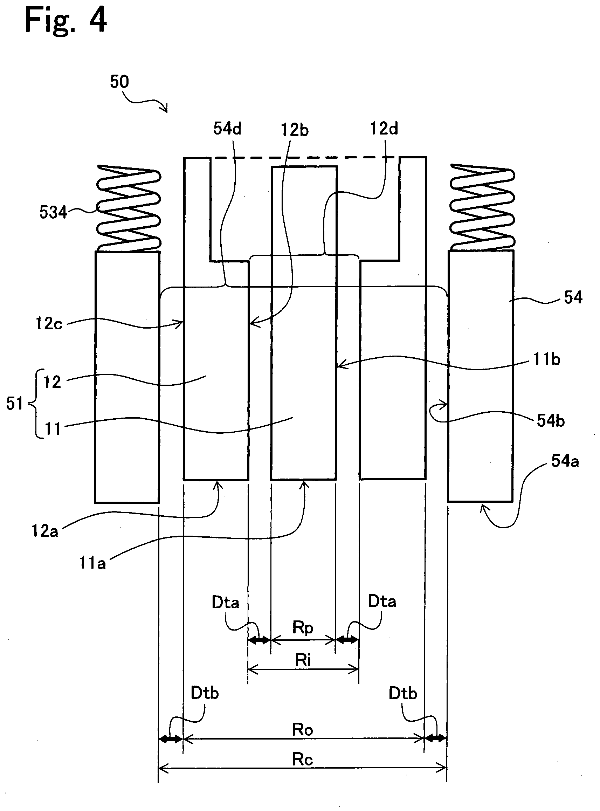

In Embodiment 1 described above, the rotary tool 51 including at least the pin member 11 and the shoulder member 12 may be configured such that the surfaces of the shoulder member 12, except the contact surface 12a, have non-affinity for the workpiece 60. However, the present invention is not limited to such a configuration. A clearance may be set at least between the pin member 11 and the shoulder member 12. By setting a suitable clearance between the pin member 11 and the shoulder member 12, the adhesion of the workpiece or the like is suppressed, which makes efficient welding possible and also makes it possible to further improve the weld quality. A configuration in which the clearance is suitably set is described with reference to Fig. 4.

As shown in Fig. 4, the configuration of the rotary tool 51 according to Embodiment 2 is fundamentally the same as that of the rotary tool 51 described in Embodiment 1, except that the rotary tool 51 according to Embodiment 2 is configured such that the clearance between the pin member 11 and the shoulder member 12 is set within a preferred range. The rotary tool 51 may include the pin member 11 and the shoulder member 12 as previously described in Embodiment 1. In addition, the rotary tool 51 may further include the clamp member 54. In this case, a clearance may be set between the shoulder member 12 and the clamp member 54 within a suitable range.

In the present embodiment, a through-hole in the shoulder member 12, in which the pin member 11 is inserted, is referred to as a "pin member insertion hole 12d". The external diameter of the pin member 11 is referred to as a pin external diameter, and the internal diameter of the pin member insertion hole 12d in the shoulder member 12 is referred to as a shoulder internal diameter. In this case, the clearance between the pin member 11 and the shoulder member 12 may be set such that the difference between the pin external diameter and the shoulder internal diameter is in the range of not less than 0.01 mm and not more than 0.1 mm. Preferably, the difference is in the range of more than 0.01 mm and less than 0.05 mm. More preferably, the difference is in a range close to 0.03 mm.

Specifically, in a case where the pin external diameter is Rp and the shoulder internal diameter is Ri as shown in Fig. 4, the difference between Rp and Ri (i.e., Ri - Rp) is Dta + Dta = 2Dta. It should be noted that Dta indicated by a block arrow in Fig. 4 is the difference between the radius of the pin member 11 and the half of the shoulder internal diameter. In the present embodiment, 2Dta may be not less than 0.01 mm and not more than 0.1 mm (0.01 mm ≤ 2Dta ≤ 0.1 mm).

If 2Dta is more than 0.1 mm, the weld quality of the workpiece 60 is reduced significantly. In addition, adhesion of aluminum to the pin member 11 and the shoulder member 12 occurs to a non-negligible degree, and also, damage to the shoulder member 12 occurs to a non-negligible degree.

If 2Dta is less than 0.01 mm, the weld quality of the workpiece 60 is favorable. In this case, however, if the rotary tool 51 is installed with low precision, then there is a possibility that the pin member 11 and the shoulder member 12 are heated excessively to be in a red-heat state. In a case where the workpiece 60 is formed of an aluminum-based material, when the rotary tool 51 is in operation, the temperature of the rotary tool 51 is normally about 450 °C. Usually, under such a termperature, the rotary tool 51 will not be heated excessively. Thus, in this case, the excessive heating of the pin member 11 and the shoulder member 12 may cause damage to the rotary tool 51.

Therefore, in the present embodiment, it is desirable to set the clearance between the pin member 11 and the shoulder member 12, such that the difference between the pin external diameter and the shoulder internal diameter is in the range of not less than 0.01 mm and not more than 0.1 mm. Setting the clearance within this range makes it possible to improve the weld quality of the workpiece 60 and suppress adhesion of the workpiece or the like between the pin member 11 and the shoulder member 12. As a result, the welding can be performed more efficiently than conventional art.

In a case where the rotary tool 51 further includes the clamp member 54, the clearance between the shoulder member 12 and the clamp member 54 may also be set within a suitable range. Similar to the through-hole of the shoulder member 12, a through-hole in the clamp member 54, in which the shoulder member 12 is inserted, is referred to as a "shoulder member insertion hole 54d". The external diameter of the shoulder member 12 is referred to as a shoulder external diameter, and the internal diameter of the shoulder member insertion hole 54d in the clamp member 54 is referred to as a clamp internal diameter. In this case, the clearance between the shoulder member 12 and the clamp member 54 may be set such that the difference between the shoulder external diameter and the clamp internal diameter is in the range of not less than 0.01 mm and not more than 0.1 mm.

Specifically, in a case where the shoulder external diameter is Ro and the clamp internal diameter is Rc as shown in Fig. 4, the difference between Ro and Rc (i.e., Rc-Ro) is Dtb + Dtb = 2Dtb. It should be noted that Dtb indicated by a block arrow in Fig. 4 is the difference between the half of the shoulder external diameter and the half of the clamp internal diameter. In the present embodiment, 2Dtb may be not less than 0.01 mm and not more than 0.1 mm (0.01 mm ≤ 2Dtb ≤ 0.1 mm).

If 2Dtb is more than 0.1 mm, adhesion of aluminum to the shoulder member 12 and the clamp member 54 occurs to a non-negligible degree, and also, coating detachment from the contact surface 54a of the clamp member 54 occurs to a non-negligible degree. If 2Dtb is less than 0.01 mm, the weld quality of the workpiece 60 is favorable. In this case, however, there is the aforementioned possibility that the shoulder member 12 is heated excessively. Such excessive heating of the shoulder member 12 may cause damage to the rotary tool 51.

As described above, in the present invention, suitable portions of the pin member 11 and the shoulder member 12 (additionally, the clamp member 54), which form the rotary tool 51, may have non-affinity for the workpiece 60, and the clearance between the pin member 11 and the shoulder member 12 may be suitably set.

By imparting non-affinity for the workpiece 60 to suitable portions of the rotary tool 51, adhesion of the workpiece or the like that has entered between components can be substantially prevented. On the other hand, by suitably setting the clearance of the rotary tool 51, the risk that the workpiece or the like enters between components can be substantially and effectively prevented while taking account of heat expansion of the rotary tool 51 or the width of the advancing and retracting movement of the rotary tool 51. Therefore, by imparting non-affinity for the workpiece 60 to suitable portions of the rotary tool 51 and suitably setting the clearance of the rotary tool 51 (i.e., by combining Embodiments 1 and 2), the adhesion of the workpiece or the like between components is further suppressed from occurring, which makes it possible to perform the welding efficiently and further improve the weld quality. Moreover, even if the entry of the workpiece or the like between components, which may cause adhesion, occurs, the amount of entry of the workpiece or the like will be significantly small, and thereby discharging of the workpiece or the like that has entered will be suppressed substantially. This makes it possible to suppress a situation where the rotary tool 51 is pressed into the workpiece 60 in such a manner as to press down materials that are discharged from between components.

As previously described, in the present embodiment, the clearance between the pin member 11 and the shoulder member 12 may be set such that the difference 2Dta between the pin external diameter and the shoulder internal diameter is in the range of 0.01 mm ≤ 2Dta ≤ 0.1 mm, and the clearance between the shoulder member 12 and the clamp member 54 may be set such that the difference 2Dtb between the shoulder external diameter and the clamp internal diameter is in the range of 0.01 mm ≤ 2Dtb ≤ 0.1 mm. However, as is clear from results in Example 2 and Reference Examples 1 to 3 described below, it is more preferable for both of the differences 2Dta and 2Dtb to be in a range close to 0.03 mm. Therefore, in the present embodiment, the difference 2Dta between the pin external diameter and the shoulder internal diameter is more preferably in the range of 0.03 mm ± 0.01 mm (0.02 mm ≤ 2Dta ≤ 0.04mm), and also, the difference 2Dtb between the shoulder external diameter and the clamp internal diameter is more preferably in the range of 0.03 mm ± 0.01 mm (0.02 mm ≤ 2Dtb ≤ 0.04 mm).

### Examples

Hereinafter, a more specific description of the present invention is given based on Examples, Comparative Example, and Reference Examples. However, the present invention is not limited by the description. A person skilled in the art can make various changes, modifications, and alterations without departing from the spirit of the present invention.

### (Example 1)

A double-acting FSJ robot system, manufactured by Kawasaki Heavy Industries, Ltd., was used as the friction stir welding apparatus 50. The rotary tool 51 used in Example 1 includes: the pin member 11, which is entirely coated with hydrogen-free DLC; the cylindrical shoulder member 12, which houses the pin member 11 in such a manner as to allow the pin member 11 to advance and retract and which is entirely coated with hydrogen-free DLC except the contact surface 12a; and the cylindrical clamp member 54, which is positioned outside the shoulder member 12. Of the rotary tool 51, the external diameter of the part that is configured to advance and retract relative to the workpiece 60 (i.e., the part including the pin member 11 and the shoulder member 12) is 6 mm, and the external diameter of the clamp member 54, which houses the advancing and retracting part therein, is 12 mm.

A stack of an aluminum member (AL6061-T6) with a thickness of 0.025 inches (about 0.635 mm) and an aluminum member (AL2024C-T3) with a thickness of 0.020 inches (about 0.508 mm) was used as the workpiece 60. Friction stir welding was performed 952 times on the workpiece 60.

After the friction stir welding was performed, the weld of the workpiece 60 was checked. No formation of significant irregularities was observed, and the external appearance of the weld was flat and favorable. The rotary tool 51 and the clamp member 54 were also checked. No aluminum adhesion was observed on the inner peripheral surface 12b of the shoulder member 12 and the inner peripheral surface 54b of the clamp member 54. Moreover, no significant damage was observed on the inner peripheral surfaces 12b and 54b.

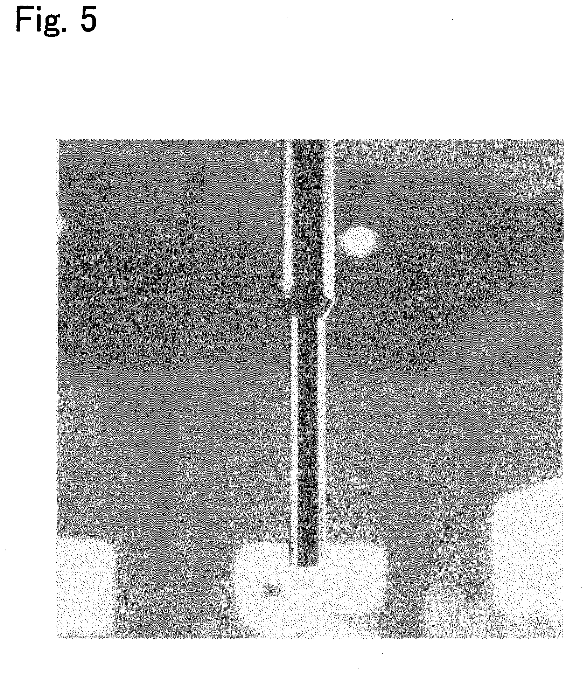

Furthermore, no aluminum adhesion was observed on the contact surface 11a of the pin member 11. As shown in Fig. 5, no aluminum adhesion was observed, i.e., the same as before the friction stir welding had been performed. It should be noted that the image in Fig. 5 has been processed such that the pin member 11 is shown more clearly than the background in order to show the state of the pin member 11 clearly.

### (Comparative Example)

Friction stir welding was performed on the workpiece 60 in the same manner as the above-described Example except for using the rotary tool 51 with the same dimensions but entirely coated with DLC that is not hydrogen-free.

After the friction stir welding was performed, the weld of the workpiece 60 was checked, and dimple-like small surface irregularities were observed. The rotary tool 51 and the clamp member 54 were also checked. Significant aluminum adhesion and damage to both the inner peripheral surface 12b of the shoulder member 12 and the inner peripheral surface 54b of the clamp member 54 were observed. In addition, aluminum adhesion to the contact surface 11a of the pin member 11 was observed.

### (Example 2)

The rotary tool 51 prepared in Example 2 includes: the pin member 11 with an external diameter of 3.0 mm; the shoulder member 12 with an external diameter of 6.0 mm and an internal diameter of 3.03 mm; and the clamp member 54 with an external diameter of 12 mm and an internal diameter of 6.03 mm. It should be noted that a hydrogen-free DLC coating was formed on the pin member 11, the shoulder member 12, and the clamp member 54.

In the configuration of Example 2, the clearance between the pin member 11 and the shoulder member 12 was set such that the difference between the pin external diameter and the shoulder internal diameter was 0.03 mm, and the clearance between the shoulder member 12 and the clamp member 54 was set such that the difference between the shoulder external diameter and the clamp internal diameter was 0.03 mm. The rotary tool 51 thus configured was used to perform welding 30 times on the same workpiece 60 as that used in Example 1.

After the welding was performed, the weld of the workpiece 60 was checked, and no major problems were observed on the portion contacted by the pin member 11 and the portion contacted by the shoulder member 12 in terms of external appearance. Also, no burr formation was observed at the boundary between the portion contacted by the pin member 11 and the portion contacted by the shoulder member 12.

The rotary tool 51 was also checked after the welding. Regarding the pin member 11, no major problems were observed in terms of external appearance, and adhesion of merely a trace amount of aluminum to the outer peripheral surface 11b was observed.

Regarding the shoulder member 12, although irregularities due to detachment of CrN coating were observed on part of the contact surface 12a, no formation of significant irregularities was observed. In addition, no major problems were observed on the inner peripheral surface 12b and the outer peripheral surface 12c in terms of external appearance. Adhesion of merely a trace amount of aluminum to the inner peripheral surface 12b was observed, and merely minor damage to the outer peripheral surface 12c was observed.

Regarding the clamp member 54, no major problems were observed on the contact surface 54a and the inner peripheral surface 54b in terms of external appearance, and adhesion of merely a trace amount of aluminum to the inner peripheral surface 54b was observed.

### (Reference Example 1)

Welding was performed on the workpiece 60 in the same manner as the above-described Example 2 except that, of the rotary tool 51 used in Reference Example 1, the shoulder member 12 had an external diameter of 6.0 mm and an internal diameter of 3.05 mm, and the clamp member 54 had an external diameter of 12 mm and an internal diameter of 6.05 mm.

In the configuration of Reference Example 1, the clearance between the pin member 11 and the shoulder member 12 was set such that the difference between the pin external diameter and the shoulder internal diameter was 0.05 mm, and the clearance between the shoulder member 12 and the clamp member 54 was set such that the difference between the shoulder external diameter and the clamp internal diameter was 0.05 mm.

After the welding was performed, the weld of the workpiece 60 was checked, and no major problems were observed on the portion contacted by the pin member 11 and the portion contacted by the shoulder member 12 in terms of external appearance. However, burr formation was observed at the boundary between the portion contacted by the pin member 11 and the portion contacted by the shoulder member 12.

The rotary tool 51 was also checked after the welding. Regarding the pin member 11, more aluminum adhesion to the outer peripheral surface 11b was observed than in the case of Example 2.

Regarding the shoulder member 12, it was observed that irregularities due to detachment of CrN coating were formed on the contact surface 12a in a more spreading manner than in the case of Example 2. In addition, more aluminum adhesion was observed on the inner peripheral surface 12b than in the case of Example 2, and damage to the outer peripheral surface 12c was observed in a larger area than in the case of Example 2.

Regarding the clamp member 54, it was observed that the hydrogen-free DLC coating had fallen off from the contact surface 54a in the vicinity of the through-hole (the shoulder member insertion hole 54d). A larger amount of aluminum adhesion to the inner peripheral surface 54b was observed than in the case of Example 2.

### (Reference Example 2)

Welding was performed on the workpiece 60 in the same manner as the above-described Example 2 except that, of the rotary tool 51 used in Reference Example 2, the shoulder member 12 had an external diameter of 6.0 mm and an internal diameter of 3.07 mm, and the clamp member 54 had an external diameter of 12 mm and an internal diameter of 6.07 mm.

In the configuration of Reference Example 2, the clearance between the pin member 11 and the shoulder member 12 was set such that the difference between the pin external diameter and the shoulder internal diameter was 0.07 mm, and the clearance between the shoulder member 12 and the clamp member 54 was set such that the difference between the shoulder external diameter and the clamp internal diameter was 0.07 mm.

After the welding was performed, the weld of the workpiece 60 was checked. Formation of scratches was observed on the portion contacted by the shoulder member 12, and formation of burrs was observed at the boundary between the portion contacted by the pin member 11 and the portion contacted by the shoulder member 12.

The rotary tool 51 was also checked after the welding. Regarding the pin member 11, more aluminum adhesion was observed than in the case of Reference Example 1.

Regarding the shoulder member 12, it was observed that irregularities were formed almost all over the contact surface 12a. In addition, more aluminum adhesion to the inner peripheral surface 12b was observed than in the case of Reference Example 1, and deeper damage in a larger area of the outer peripheral surface 12c was observed than in the case of Reference Example 1.

Regarding the clamp member 54, it was observed that the hydrogen-free DLC coating had fallen off from the contact surface 54a in the vicinity of the through-hole (the shoulder member insertion hole 54d) to a greater degree than in the case of Reference Example 1. A larger amount of aluminum adhesion to the inner peripheral surface 54b was observed than in the case of Reference Example 1. It should be noted that the area of the adhesion formed on the inner peripheral surface 54b of the clamp member 54 substantially corresponds to the area of the damage to the outer peripheral surface 12c of the shoulder member 12.

### (Reference Example 3)

Welding was performed on the workpiece 60 in the same manner as the above-described Example 2 except that, of the rotary tool 51 used in Reference Example 3, the shoulder member 12 had an external diameter of 6.0 mm and an internal diameter of 3.01 mm, and the clamp member 54 had an external diameter of 12 mm and an internal diameter of 6.01 mm.

In the configuration of Reference Example 3, the clearance between the pin member 11 and the shoulder member 12 was set such that the difference between the pin external diameter and the shoulder internal diameter was 0.01 mm, and the clearance between the shoulder member 12 and the clamp member 54 was set such that the difference between the shoulder external diameter and the clamp internal diameter was 0.01 mm.

After the welding was performed, the weld of the workpiece 60 was checked. No major problems were observed on the portion contacted by the pin member 11 and the portion contacted by the shoulder member 12 in terms of external appearance. Also, no burr formation was observed at the boundary between the portion contacted by the pin member 11 and the portion contacted by the shoulder member 12.

However, the pin member 11 and the shoulder member 12 of the rotary tool 51 had a tendency to be heated excessively during the welding.

### (Comparison of Example 2 and Reference Examples 1 to 3)

It is understood from the comparison of the results of Example 2 and Reference Examples 1 to 3 that each of Example 2 and Reference Examples 1 to 3 makes it possible to suppress excessive aluminum adhesion and weld the workpiece 60 sufficiently. However, when the difference between the pin external diameter and the shoulder internal diameter is increased, burrs are formed on the weld of the workpiece 60, resulting in a lower welding quality. In addition, more aluminum adhesion occurs on the inner peripheral surface 12b of the shoulder member 12, and the adhesion is thicker. Consequently, the load of the pin member 11 and the shoulder member 12 when they operate relative to each other increases, resulting in a higher possibility of reduction of life of the rotary tool 51.

Similarly, when the difference between the shoulder external diameter and the clamp internal diameter is increased, more aluminum adhesion occurs on the inner peripheral surface 54b of the clamp member 54, and the adhesion is thicker. Consequently, the load of the shoulder member 12 and the clamp member 54 when they operate relative to each other increases, resulting in a higher possibility of reduction of life of the rotary tool 51.

From the results described above, it is understood that, in the present invention, although both the clearance between the pin member 11 and the shoulder member 12 and the clearance between the shoulder member 12 and the clamp member 54 may be in the range of not less than 0.01 mm and not more than 0.1 mm, it is preferable that both of the clearances be in the range of more than 0.01 mm and less than 0.05 mm, and it is more preferable that both of the clearances be in a range close to 0.03 mm (e.g., approximately 0.03 ± 0.01 mm).

It should be noted that the present invention is not limited to the embodiments described above, and various modifications can be made within the scope of Claims. Embodiments obtained by suitably combining technical means that are disclosed in different embodiments and variations also fall within the technical scope of the present invention.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the scope of the present invention as defined by the appended claims.

### Industrial Applicability

The present invention is widely and suitably applicable to cases where friction stir welding or friction stir spot welding is performed on various workpieces.

### Reference Signs List

- 11: pin member
- 11a: contact surface (of the pin member)
- 11b: outer peripheral surface (of the pin member)
- 12: shoulder member
- 12a: contact surface (of the shoulder member)
- 12b: inner peripheral surface (of the shoulder member)
- 12c: outer peripheral surface (of the shoulder member)
- 12d: pin member insertion hole (through-hole of the shoulder member)
- 50: (double-acting) friction stir welding apparatus
- 51: rotary tool (welding tool)
- 54: clamp member
- 54a: contact surface (of the clamp member)
- 54b: inner peripheral surface (of the clamp member)
- 54d: shoulder member insertion hole (through-hole of the clamp member)
- 56: backing member
- 56a: supporting surface
- 60: workpiece

## Claims

1. A welding tool for use in double-acting friction stir welding or double-acting friction stir spot welding in which a workpiece (60) is partially stirred to be welded, the welding tool being configured to rotate around an axis (Xr) to stir the workpiece (60) and configured to advance and retract in a direction of the axis (Xr),
the welding tool comprising:
a columnar pin member (11) whose outer peripheral surface (11b) has low friction against the workpiece (60), and
a shoulder member (12) positioned outside the pin member (11) and having a cylindrical shape externally surrounding the pin member (11), the shoulder member (12) being configured to rotate around an axis (Xr), which is the same as an axis of rotation of the pin member (11), wherein an inner peripheral surface (12b) of the shoulder member (12), the inner peripheral surface (12b) facing the pin member (11), has low friction against the workpiece (60), wherein
a contact surface (11a) of the columnar pin member (11), the contact surface (11a) coming into contact with the workpiece (60), has low friction against the workpiece (60) and an outer peripheral surface (12c) of the shoulder member (12) has low friction against the workpiece (60) and only a contact surface (120) of the shoulder member (12), the contact surface (12a) coming into contact with the workpiece (60), has high friction against the workpiece (60), **characterized in that** a state of having low friction against the workpiece (60) is realized by surface treatment, by changing a material of the tool into different material, or by changing a property of the material of the tool into a different property.

2. The welding tool according to claim 1, further comprising a clamp member (54) positioned outside the shoulder member (12), the clamp member (54) being configured to push one surface of the workpiece (60), wherein
a contact surface (54a) and an inner peripheral surface (54b) of the clamp member (54) have low friction against the workpiece (60), the contact surface (54a) coming into contact with the workpiece (60), the inner peripheral surface (54b) facing the outer peripheral surface (12c) of the shoulder member (12).

3. The welding tool according to claim 1, wherein a state of having low friction against the workpiece (60) is realized by a coating of diamond or hydrogen-free diamond-like carbon.

4. A welding apparatus (50) for use in double-acting friction stir welding or double-acting friction stir spot welding, the welding apparatus (50) comprising the welding tool according to any one of claims 1 to 3.

## Patentansprüche

1. Schweißwerkzeug für Rührreibschweißen mit Zweifachwirkung oder Rührreibpunktschweißen mit Zweifachwirkung, bei dem ein Werkstück (60) teilweise gerührt wird, um geschweißt zu werden, wobei das Schweißwerkzeug dazu konfiguriert ist, sich um eine Achse (Xr) zu drehen, um das Werkstück (60) zu reiben, und dazu konfiguriert ist, in der Richtung der Achse (Xr) vor- und zurückgezogen zu werden,
wobei das Schweißwerkzeug Folgendes umfasst:
ein säulenförmiges Stiftelement (11), dessen äußere Umfangsfläche (11b) eine niedrige Reibung gegen das Werkstück (60) aufweist, und
ein Schulterelement (12), das außerhalb des Stiftelements (11) angeordnet ist und eine zylindrische Form aufweist, die das Stiftelement (11) äußerlich umgibt, wobei das Schulterelement (12) dazu konfiguriert ist, sich um eine Achse (Xr) zu drehen, bei der es sich um die gleiche Achse wie die Drehachse des Stiftelements (11) handelt, wobei eine innere Umfangsfläche (12b) des Schulterelements (12), welche innere Umfangsfläche (12b) zu dem Stiftelement (11) zeigt, eine niedrige Reibung gegen das Werkstück (60) aufweist, wobei
eine Kontaktfläche (11a) des säulenförmigen Stiftelements (11), welche Kontaktfläche (11a) mit dem Werkstück (60) in Berührung kommt, eine niedrige Reibung gegen das Werkstück (60) aufweist, und eine äußere Umfangsfläche (12c) des Schulterelements (12) eine niedrige Reibung gegen das Werkstück (60) aufweist, und nur eine Kontaktfläche (120) des Schulterelements (12), welche Kontaktfläche (12a) mit dem Werkstück (60) in Berührung kommt, eine hohe Reibung gegen das Werkstück (60) aufweist, **dadurch gekennzeichnet, dass** ein Zustand, bei dem eine niedrige Reibung gegen das Werkstück (60) vorliegt, durch Oberflächenbehandlung realisiert wird, indem ein Material des Werkzeugs in ein anderes Material geändert wird, oder indem eine Eigenschaft des Materials des Werkzeugs in eine andere Eigenschaft geändert wird.

2. Schweißwerkzeug nach Anspruch 1, das weiterhin ein Klemmelement (54) umfasst, welches außerhalb des Schulterelements (12) angeordnet ist, wobei das Klemmelement (54) so konfiguriert ist, dass es gegen eine Oberfläche des Werkstücks (60) drückt, wobei
eine Kontaktfläche (54a) und eine innere Umfangsfläche (54b) des Klemmelements (54) eine niedrige Reibung gegen das Werkstück (60) aufweisen, die Kontaktfläche (54a) mit dem Werkstück (60) in Berührung kommt, und die innere Umfangsfläche (54b) zu der äußeren Umfangsfläche (12c) des Schulterelements (12) zeigt.

3. Schweißwerkzeug nach Anspruch 1, wobei ein Zustand, bei dem eine niedrige Reibung gegen das Werkstück (60) vorliegt, durch eine Diamantbeschichtung oder eine Beschichtung aus wasserstofffreiem diamantartigem Kohlenstoff realisiert wird.

4. Schweißvorrichtung (50) zur Verwendung beim Rührreibschweißen mit Zweifachwirkung oder beim Rührreibpunktschweißen mit Zweifachwirkung, wobei die Schweißvorrichtung (50) das Schweißwerkzeug nach einem der Ansprüche 1 bis 3 umfasst.

## Revendications

1. Outil de soudage destiné au soudage par friction-malaxage à double action ou au soudage par points par friction-malaxage à double action où une pièce d'ouvrage (60) est partiellement malaxée afin d'être soudée, l'outil de soudage étant conçu pour tourner sur un axe (Xr) afin de malaxer la pièce d'ouvrage (60) et étant conçu pour s'avancer et se retirer dans le sens de l'axe (Xr),
l'outil de soudage comprenant :
un élément formant pion (11) en forme de colonne dont la surface périphérique extérieure (11b) a un faible frottement contre la pièce d'ouvrage (60), et
un élément formant épaulement (12) disposé sur l'extérieur de l'élément formant pion (11) et présentant une forme cylindrique entourant extérieurement l'élément formant pion (11), ledit élément formant épaulement (12) étant conçu pour tourner sur un axe (Xr), identique à l'axe de rotation de l'élément formant pion (11), une surface périphérique intérieure (12b) de l'élément formant épaulement (12), laquelle surface périphérique intérieure (12b) est tournée vers l'élément formant pion (11), a un faible frottement contre la pièce d'ouvrage (60) ; dans lequel outil de soudage
une surface de contact (11a) de l'élément formant pion (11) en forme de colonne, laquelle surface de contact (11a) vient au contact de la pièce d'ouvrage (60), a un faible frottement contre la pièce d'ouvrage (60), et une surface périphérique extérieure (12c) de l'élément formant épaulement (12) a un faible frottement contre la pièce d'ouvrage (60), et seulement une surface de contact (12a) de l'élément formant épaulement (12), laquelle surface de contact (12a) vient au contact de la pièce d'ouvrage (60), a un frottement élevé contre la pièce d'ouvrage (60) ; **caractérisé en ce que** l'état de faible frottement contre la pièce d'ouvrage (60) est réalisé par traitement de surface, par modification d'un matériau de l'outil en un matériau différent, ou par modification d'une propriété du matériau de l'outil en une propriété différente.

2. Outil de soudage selon la revendication 1, comprenant en outre un élément de serrage (54) placé extérieurement à l'élément formant épaulement (12), l'élément de serrage (54) étant conçu pour pousser une surface de la pièce d'ouvrage (60) ;
une surface de contact (54a) et une surface périphérique intérieure (54b) de l'élément de serrage (54) ayant un faible frottement contre la pièce d'ouvrage (60), la surface de contact (54a) venant au contact de la pièce d'ouvrage (60), la surface périphérique intérieure (54b) étant tournée vers la surface périphérique extérieure (12c) de l'élément formant épaulement (12).

3. Outil de soudage selon la revendication 1, dans lequel un état de faible frottement contre la pièce d'ouvrage (60) est réalisé par revêtement de diamant ou de carbone sous forme de diamant amorphe exempt d'hydrogène.

4. Appareil de soudage (50) destiné au soudage par friction-malaxage à double action ou au soudage par points par friction-malaxage à double action, l'appareil de soudage (50) comprenant l'outil de soudage selon l'une quelconque des revendications 1 à 3.
